# EUROPEAN PATENT APPLICATION

(11) **EP 2 698 246 A1**
(43) Date of publication of application: **19.02.2014**
(21) Application number: 12770625.7
(22) Date of filing: 09.04.2012
(51) Int. Cl.: B32B 9/00, C09D 1/00, C09D 7/12, C09D 201/00, C09K 3/18

(54) **FUNCTIONAL ARTICLE, ARTICLE FOR TRANSPORT EQUIPMENT, ARTICLE FOR CONSTRUCTION, AND COMPOSITION FOR COATING**

(30) Priority: 11.04.2011 JP 2011087383
(71) Applicant: Asahi Glass Company, Limited, Chiyoda-ku Tokyo 100-8405 (JP)
(72) Inventor: MORI, Yusuke, Tokyo 100-8405 (JP); KISHIKAWA, Noriko, Tokyo 100-8405 (JP)
(74) Representative: Müller-Boré & Partner Patentanwälte PartG mbB
(86) International application number: PCT/JP2012/059729
(87) International publication number: WO 2012/141150

(57) **Abstract**

To provide a functional article comprising a water-absorbing layer having abrasion resistance and water-absorbing functions relating to the dew condensation prevention, the moisture-conditioning function, the anti-fouling function, the anti-fogging function, the anti-icing function, etc., and an article for a transport equipment and an article for building provided with such a functional article. Further, to provide a coating composition capable of forming a water-absorbing coating film having water-absorbing functions relating to the dew condensation prevention, the moisture-conditioning function, the anti-fouling function, the anti-fogging function, the anti-icing function, etc. and having abrasion resistance as well.

A functional article comprising a substrate and a water-absorbing layer provide on at least one surface of the substrate, wherein the water-absorbing layer contains porous inorganic fine particles and an inorganic oxide as a binder component, and a coating composition comprising porous inorganic fine particles having an average primary particle size of from 5 to 100 nm and an average pore size of from 1 to 50 nm, a metal alkoxide and/or its partially hydrolyzed condensate, and a solvent.

## Description

### TECHNICAL FIELD

The present invention relates to a functional article, an article for a transport equipment, an article for building, and a coating composition.

### BACKGROUND ART

Heretofore, a technique has been known to form a coating film having functions such as dew condensation prevention, moisture-conditioning function, anti-fouling function, anti-fogging function and anti-icing function on a substrate thereby to impart such functions to the substrate, and is utilized in the field of building, the field of a transport equipment such as an automobile, and the field of electronic equipment and electrical equipment, etc.

For example, Patent Documents 1 and 2 disclose a technique to apply a composition containing porous inorganic fine particles having the above functions, specifically, porous silica fine particles or the like and a binder resin, to a substrate and drying the composition thereby to form a coating film containing them.

However, each of coating films having the above functions such as dew condensation prevention, moisture-conditioning function, anti-fouling function, anti-fogging function and anti-icing function obtained by such a technique contains a large amount of an organic material as a component constituting the coating film, and is thereby insufficient in the abrasion resistance.

### PRIOR ART DOCUMENTS

### PATENT DOCUMENTS

Patent Document 1: JP-A-2007-31710
Patent Document 2: JP-A-2000-43179

### DISCLOSURE OF INVENTION

### TECHNICAL PROBLEM

It is an object of the present invention to provide a functional article comprising a water-absorbing layer having water-absorbing functions relating to the dew condensation prevention, the moisture-conditioning function, the anti-fouling function, the anti-fogging function, the anti-icing function and the like and having abrasion resistance as well, and an article for a transport equipment and an article for building, provided with such a functional article. Further, another object of the present invention is to provide a coating composition capable of forming a water-absorptive coating film having water-absorbing functions relating to the dew condensation prevention, the moisture-conditioning function, the anti-fouling function, the anti-fogging function, the anti-icing function and the like and having abrasion resistance as well.

### SOLUTION TO PROBLEM

The present invention provides the following functional article, article for a transport equipment, article for building and coating composition.
[1] A functional article comprising a substrate and a water-absorbing layer provide on at least one surface of the substrate, wherein the water-absorbing layer contains porous inorganic fine particles and an inorganic oxide as a binder component.
[2] The functional article according to [1], wherein the water-absorbing layer further contains an organic polymer as a binder component.
[3] The functional article according to [1] or [2], wherein the porous inorganic fine particles have an average primary particle size of from 5 to 100 nm and an average pore size of from 1 to 50 nm.
[4] The functional article according to any one of [1] to [3], wherein the inorganic oxide in the water-absorbing layer is a metal oxide obtained by hydrolytic condensation of a metal alkoxide.
[5] The functional article according to any one of [2] to [4], wherein the organic polymer is a hydrophilic organic polymer.
[6] The functional article according to any one of [1] to [5], wherein the ratio of the content of the porous inorganic fine particles and the inorganic oxide in the water-absorbing layer is such that the content of the inorganic oxide is from 20 to 400 parts by mass per 100 parts by mass of the porous inorganic fine particles.
[7] The functional article according to any one of [2] to [6], wherein the ratio of the content of the porous inorganic fine particles and the organic polymer in the water-absorbing layer is such that the content of the organic polymer is from 20 to 80 parts by mass per 100 parts by mass of the porous inorganic fine particles.
[8] The functional article according to any one of [1] to [7], wherein the substrate is a glass plate.
[9] An article for a transport equipment, provided with the functional article as defined in any one of [1] to [8].
[10] An article for building, provided with the functional article as defined in any one of [1] to [8].
[11] A coating composition comprising porous inorganic fine particles having an average primary particle size of from 5 to 100 nm and an average pore size of from 1 to 50 nm, a metal alkoxide and/or its partially hydrolyzed condensate, and a solvent.
[12] The coating composition according to [11], which further contains an organic polymer or its material component.
[13] The coating composition according to [12], wherein the organic polymer is a hydrophilic organic polymer.
[14] The coating composition according to any one of [11] to [13], wherein the ratio of the content of the porous inorganic fine particles and the metal alkoxide and its partially hydrolyzed condensate in the composition is such that the total amount of the metal alkoxide and its partially hydrolyzed condensate as calculated as an oxide is from 20 to 400 parts by mass per 100 parts by mass of the porous inorganic fine particles.
[15] The coating composition according to any one of [12] to [14], wherein the ratio of the content of the porous inorganic fine particles and the organic polymer and its material component in the composition is such that the total amount of the organic polymer and its material component is from 20 to 80 parts by mass per 100 parts by mass of the porous inorganic fine particles.

### ADVANTAGEOUS EFFECTS OF INVENTION

According to the present invention, it is possible to provide a functional article having water-absorbing functions relating to the dew condensation prevention, the moisture-conditioning function, the anti-fouling function, the anti-fogging function, the anti-icing function and the like and having abrasion resistance as well, and an article for a transport equipment and an article for building, provided with such a functional article. Further, the coating composition of the present invention is capable of forming a water-absorptive coating film having water-absorbing functions relating to the dew condensation prevention, the moisture-conditioning function, the anti-fouling function, the anti-fogging function, the anti-icing function and the like and having abrasion resistance as well.

### DESCRIPTION OF EMBODIMENTS

Now, the present invention will be described in detail. However, it should be understood that the present invention is by no means restricted to the following embodiments.

### [Functional article]

The functional article of the present invention is a functional article comprising a substrate and a water-absorbing layer provided on at least one surface of the substrate, wherein the water-absorbing layer contains porous inorganic fine particles and an inorganic oxide as a binder component.

The functional article of the present invention has a water-absorbing layer containing porous inorganic fine particles as a water-absorbing component which contributes to the dew condensation prevention, the moisture-conditioning function, the anti-fouling function, the anti-fogging function, the anti-icing function and the like formed into a layer using an inorganic oxide as a binder component. By the water-absorbing layer in the functional article having such a constitution, while the water-absorbing performance of the porous inorganic fine particles is sufficiently fulfilled, the layer can have sufficient abrasion resistance in the form of a layer.

Further, the water-absorbing layer in the functional article of the present invention may be one formed into a layer using a binder component comprising an inorganic oxide and an organic polymer in combination, within a range not to impair the effects of the abrasion resistance of the present invention, in order that the water-absorbing performance of the porous inorganic fine particles contained in the water-absorbing layer is more efficiently fulfilled. The constitution of the binder component as a constituent of the water-absorbing layer is properly selected depending upon the performance required for the functional article.

Now, constituents of the functional article of the present invention will be described.

### <Substrate>

The substrate to be used for the functional article of the present invention is not particularly limited so long as it is a substrate made of a material to which the water-absorbing property relating to the dew condensation prevention, the moisture-conditioning function, the anti-fouling function, the anti-fogging function, the anti-icing function and the like should be imparted, and it is preferably a substrate made of glass, a plastic, a metal, a ceramic or a combination thereof (e.g. a composite material or a laminated material), more preferably a transparent substrate made of glass or a plastic, a mirror or the like. Glass may, for example, be conventional soda lime glass, borosilicate glass, alkali-free glass or quartz glass, and among them, soda lime glass is particularly preferred. Further, the plastic may, for example, be an acrylic resin such as polymethyl methacrylate, an aromatic polycarbonate resin such as bisphenol A polycarbonate, or an aromatic polyester resin such as polyethylene terephthalate (PET), and among them, polyethylene terephthalate (PET), bisphenol A polycarbonate or the like is preferred.

The substrate may be flat, or the whole or a part thereof may be curved. The thickness of the substrate is properly selected depending upon the application of the functional article, and is usually preferably from 1 to 10 mm. Particularly, the substrate of the functional article of the present invention is preferably a glass plate.

### <Water-absorbing layer>

In the functional article of the present invention, the water-absorbing layer is one obtained by forming porous inorganic fine particles having water-absorbing functions into a layer by a binder component comprising an inorganic oxide as a constituent, as mentioned above. For the water-absorbing layer, as the case requires, a binder component comprising an inorganic oxide and an organic polymer in combination is used.

In the functional article of the present invention, the thickness of the water-absorbing layer is preferably from 0.1 to 10 µm, more preferably from 0.1 to 5 µm, from the viewpoint such that the functional article has sufficient water-absorbing function while maintaining mechanical strength such as the abrasion resistance.

In the functional article of the present invention, as the water-absorbing performance of the water-absorbing layer, the water absorptivity (a time until an image is distorted) measured by the following water vapor exposure test is preferably at least 20 seconds, more preferably at least 30 seconds. This water absorptivity being at least 20 seconds is considered to correspond to a saturated water absorption of at least 30 mg/cm³, and the water absorptivity being at least 30 seconds is considered to correspond to a saturated water absorption of at least 50 mg/cm³. The upper limit of the saturated water absorption of the water-absorbing layer is not particularly limited, but is preferably 100 mg/cm³ with a view to securing the durability such as the abrasion resistance.

### (Method of measuring water absorptivity by water vapor exposure test)

A water-absorbing layer formed on a substrate is left to stand in an environment at 20°C under a relative humidity of 50% for one hour, and then the surface of the water-absorbing layer is exposed to warm water vapor of 40°C, and a time until an image is distorted by cloudiness or a water film is measured, and the time is taken as the water absorptivity. Distortion of the image by cloudiness or a water film is visually judged.

Now, the respective components constituting the water-absorbing layer according to the present invention will be described.

### (1) Porous inorganic fine particles

The porous inorganic fine particles contained in the water-absorbing layer are not particularly limited so long as they are porous inorganic fine particles having water-absorbing performance by having many pores. A material constituting the porous inorganic fine particles may be specifically a metal oxide such as silicon oxide, zinc oxide, cerium oxide, iron oxide, titanium oxide, zirconium oxide, aluminum oxide, tin oxide or zeolite, a metal carbide such as silicon carbide, or a metal nitride such as silicon nitride. The porous inorganic fine particles may be constituting by one type, or may be constituting by a material containing two or more types. Among them, silicon oxide, titanium oxide, zirconium oxide or the like is preferred, and silicon oxide is more preferred.

The average primary particle size of the porous inorganic fine particles to be used in the present invention is preferably from 5 to 100 nm, more preferably from 10 to 80 nm, with a view to forming a uniform water-absorbing layer having sufficient mechanical strength while maintaining the water-absorbing performance. Further, depending upon the application of the functional article, for example, in a case where the water-absorbing layer is formed on a transparent substrate and is required to have transparency, the average primary particle size of the porous inorganic fine particles is preferably from 5 to 100 nm, more preferably from 10 to 50 nm. Further, the particle size distribution of the porous inorganic fine particles is preferably from 1 to 200 nm, more preferably from 1 to 100 nm.

Further, the average pore size of the porous inorganic fine particles to be used in the present invention is preferably from 1 to 50 nm, more preferably from 2 to 20 nm from the viewpoint of sufficient water-absorbing performance.

In this specification, the average primary particle size is an average value of particle sizes of 200 particles randomly selected from an image of the porous inorganic fine particle sol taken by a transmission electron microscope, specifically JEM-1230 (manufactured by JEOL Ltd.) or the like. Further, the average pore size is a value calculated by an image analysis program by a transmission electron microscope JEM-1230 (manufactured by JEOL Ltd.).

The pore volume of the porous inorganic fine particles to be used in the present invention is preferably from 0.5 to 2.0 cm³/g, more preferably from 0.5 to 1.0 cm³/g, from the viewpoint such that the water-absorbing layer has sufficient mechanical strength while maintaining the water-absorbing performance. In this specification, the pore volume of the porous inorganic fine particles is a value calculated by a BET method.

Here, commonly, pores which the porous material has are classified into micropores having a pore size less than 2 nm, mesopores of from 2 nm to 50 nm and macropores larger than 50 nm, and as mentioned above, the preferred average pore size of the porous inorganic fine particles to be used in the present invention is from 1 to 50 nm. In this specification, in the porous inorganic fine particles, pores having the preferred average pore size within a range of from 1 to 50 nm will be referred to as mesopores.

The porous inorganic fine particles to be used in the present invention are preferably metal oxide fine particles having mesopores as mentioned above, and among them, particularly preferred is mesoporous silica, which has a large pore volume and is also excellent in the mechanical properties.

The porous inorganic fine particles, preferably metal oxide fine particles having mesopores to be used in the present invention may be produced by various known methods in accordance with the type. For example, a method for producing a mesoporous metal oxide employing a sol-gel method using micelles of a surfactant as a mold may be mentioned as a common method. Now, an example for producing mesoporous silica to be preferably used in the present invention, employing this production method, will be described.

For production of the mesoporous silica by the above method, a surfactant is dissolved at a predetermined concentration of at least the critical micelle concentration in a reaction solution containing water as the main medium, whereby micelles having predetermined size and structure are formed, which are used as a mold. In the presence of a hydrolyzable silicon compound as a silica source and a slight amount of an acid or a base as a catalyst in the solution, and under reaction conditions such that the hydrolyzable silicon compound is subjected to hydrolytic condensation, the hydrolyzable silicon compound undergoes the hydrolytic condensation reaction around the micelles of the surfactant and is polymerized to form a silica skeleton of a polysiloxane.

Then, the micelles of the surfactant used as a mold are removed. Usually, the above-obtained silica skeleton including the surfactant micelle therein is fired at high temperature, whereby the micelles of the surfactant as a mold are decomposed and removed, and pure mesoporous silica is obtained. Further, as the case requires, the micelles of the surfactant may be removed by e.g. ultrafiltration to obtain mesoporous silica.

The average primary particle size of the mesoporous silica obtainable may be adjusted by the shape and the size of micelles formed by the surfactant. Specifically, it is properly adjusted e.g. by the type of the surfactant, the concentration of the surfactant in the reaction solution, the reaction solution temperature, and the like. The average primary particles size of the mesoporous silica may be adjusted also by controlling conditions for the hydrolytic condensation reaction of the silica source. Further, a desired average primary particle size may be achieved by grinding and classifying the mesoporous silica after the high temperature firing by an appropriate method.

The mesoporous silica having an average primary particle size of from 5 to 100 nm to be used in a case where transparency is required for the functional article of the present invention, is preferably one obtained by adjusting the shape and the size of the micelles formed by the surfactant to a certain extent and further adjusting them by controlling the conditions for the hydrolytic condensation reaction of the silica source. This is because the mesoporous silica obtained by adjusting the reaction conditions for the hydrolytic condensation tends to have a narrower particle size distribution as compared with mesoporous silica obtained by grinding and classification after firing.

Now, a method for producing mesoporous silica having an average primary particle size of from 5 to 100 nm to be used in a case where transparency is required for the functional article of the present invention, by means of a sol-gel method using micelles of a surfactant as a mold, will be specifically described.

As the silica source, an alkoxysilane and/or its partial hydrolytic condensation is preferably used. The alkoxysilane is classified into a monofunctional alkoxysilane to a tetrafunctional alkoxysilane depending upon the number of alkoxy groups bonded to the silicon atom. As specific examples, the tetrafunctional alkoxysilane may, for example, be tetramethoxysilane, tetraethoxysilane, tetrabutoxysilane, tetrapropoxysilane or diethoxydimethoxysilane, the trifunctional alkoxysilane may, for example, be methyltrimethoxysilane, methyltriethoxysilane, propyltrimethoxysilane or phenyltriethoxysilane, the bifunctional alkoxysilane may, for example, be dimethyldimethoxysilane or dimethyldiethoxysilane, and the monofunctional alkoxysilane may, for example, be trimethylmethoxysilane. They may be used alone or in combination of two or more.

In this specification, a partially hydrolyzed condensate of an alkoxysilane means a polymer to such an extent that it is soluble in a reaction solvent, among oligomers (multimers) formed by hydrolysis of a multifunctional alkoxysilane, followed by dehydration condensation. Further, a partial hydrolytic condensate has a hydrolyzable group or a silanol group, and it has such a property that it becomes finally a cured product as a result of further hydrolytic condensation. Further, the partially hydrolyzed condensate may be a mixture of oligomers differing in the degree of multimerization, or may contain an unreacted alkoxysilane (monomer).

As the alkoxysilane, a compound having at least two alkoxysilyl groups, having two silicon atoms each having an alkoxy group bonded by an alkyl group, such as bis(triethoxysilyl)methane or bis(triethoxysilyl)ethane may also be used.

Among them, the alkoxysilane to be the silica source is preferably a trifunctional alkoxysilane or a tetrafunctional alkoxysilane. By using the trifunctional or tetrafunctional alkoxysilane as the silica source, mesoporous silica having excellent uniformity will be obtained.

The surfactant is preferably a quaternary ammonium salt having a long chain alkyl group. Such a surfactant may, for example, be specifically alkyltrimethylammonium halide, dialkyldimethylammonium halide or alkylmethylammonium halide. The alkyl group which such a surfactant has may be specifically a C₁₂₋₂₀ alkyl group, and the halogen atom may be chlorine or bromine. Among them, hexadecyltrimethylammonium bromide or the like is preferably used.

The amount of the surfactant to be used is preferably an amount such that the concentration is at least the critical micelle concentration and from 0.03 to 12.0 parts by mass, more preferably from 0.1 to 1.5 parts by mass per 100 parts by mass of the solvent containing water as the main component in the reaction solution. Further, the amount of the surfactant is preferably from 50 to 200 parts by mass, more preferably from 70 to 150 parts by mass per 100 parts by mass of the alkoxysilane.

For production of the mesoporous silica having the above average primary particle size, the pH of the reaction solution is preferably adjusted to be within a range of from 8 to 11, and the pH of the reaction solution is more preferably from 8 to 10. Accordingly, it is preferred to blend a basic catalyst capable of adjusting the reaction solution to have such a pH, for example, ammonia, an alkanolamine or an alkylamine, more specifically an alkanolamine such as triethanolamine or diethanolamine or an alkylamine such as methylamine, dimethylamine, trimethylamine, n-butylamine or n-propylamine, with the reaction solution while the amount blended is properly adjusted. As the basic catalyst to be used, among them, triethanolamine, trimethylamine or the like is preferred.

As the production method, specifically, an aqueous solution of the above predetermined amount of the surfactant and the basic catalyst is prepared, and is stirred at a temperature of from 50 to 90°C, preferably from 70 to 90°C for from 0.3 to 1.0 hour. Then, to the aqueous solution, the predetermined amount of the silica source, preferably an alkoxysilane is added, followed by stirring at a temperature of from 50 to 90°C, preferably from 70 to 90°C for from 1 to 5 hours, whereby mesoporous silica having the above average primary particle size and including the micelles of the surfactant, is obtained.

Then, to remove the surfactant from the mesoporous silica including the micelles of the surfactant, an ultrafiltration treatment is carried out. As the conditions for the ultrafiltration, using as an ultrafiltration membrane a membrane having a molecular weight cutoff of from 12,000 to 14,000, a treatment with an acidic aqueous solution such as a 1 to 3 M acetic acid aqueous solution or hydrochloric acid aqueous solution as a surfactant eluent is carried out about 1 to about 10 times. Further, an ultrafiltration treatment using water as an acid removal step is carried out, and finally filtration through a 0.1 to 1.0 µm filter is carried out. By this method, mesoporous silica is obtained in the form of a dispersion, which is used for the after-mentioned coating composition for forming the water-absorbing layer as it is.

### (2) Inorganic oxide

In the functional article of the present invention, the inorganic oxide contained in the absorbing layer functions as a binder component to fix the porous inorganic fine particles in the form of a layer on the substrate. The binder component may further contain the after-mentioned organic polymer as the case requires in some cases, however, from the viewpoint of the abrasion resistance, the binder component is preferably constituted only by the inorganic oxide.

Accordingly, the inorganic oxide to be used in the present invention has a property capable of forming a coating film by itself on the above-described substrate. Further, in the water-absorbing layer of the present invention, the content of the porous inorganic fine particles is preferably as high as possible within the range where the mechanical strength such as the abrasion resistance as the layer can be maintained. The ratio of the content of the porous inorganic fine particles and the inorganic oxide, which satisfies both maintenance of the mechanical property and the water-absorbing performance of the water-absorbing layer may be such that the content of the inorganic oxide is from 20 to 400 parts by mass per 100 parts by mass of the porous inorganic fine particles. This ratio is more preferably such that the content of the inorganic oxide is from 40 to 200 parts by mass per 100 parts by mass of the porous inorganic fine particles.

In this specification, the amount of the material component of the inorganic oxide means an amount of the material component of the inorganic oxide as calculated as an oxide unless otherwise specified.

The inorganic oxide to be used in the present invention is not particularly limited so long as it functions as the binder component, and may be specifically the same metal oxide as the porous inorganic fine particles, such as silicon oxide, zinc oxide, cerium oxide, iron oxide, titanium oxide, zirconium oxide or aluminum oxide. In the present invention, the inorganic oxides may be used alone or in combination of two or more. Further, among them, silicon oxide is preferred from the viewpoint of the abrasion resistance, easiness of coating film formation, the transparency, and the like.

Further, the inorganic oxide which functions as the binder component in the water-absorbing layer in the present invention is, from the viewpoint of coating film formation, preferably such that it is present in the water-absorbing layer in the form of a cured product obtained by hydrolytic condensation of a metal compound having a hydrolyzable group as a material component. The hydrolyzable group which such a metal compound has is preferably an alkoxy group, and accordingly, the metal compound having a hydrolyzable group is preferably a metal alkoxide. Now, the method of forming a coating film by using a metal compound having a hydrolyzable group and subjecting it to hydrolytic condensation to convert it to a metal oxide will be described with reference to a silica coating film as an example.

In the hydrolyzable silicon compound having a silicon atom to which a hydrolyzable group is bonded, the hydrolyzable group is hydrolyzed in the presence of water and an acid as a catalyst to form a hydroxy group (silanol group) bonded to a silicon atom, and then silanol groups are subjected to dehydration condensation to form a siloxane bond represented by -Si-O-Si-, whereby the hydrolyzable silicon compound is formed into a high molecular weight compound.

From only a bifunctional hydrolyzable silicon compound, a linear polysiloxane is formed by hydrolytic condensation, and from a trifunctional hydrolyzable silicon compound or a tetrafunctional hydrolyzable silicon compound, a three-dimensional network of a polysiloxane is formed by the hydrolytic condensation to form a coating film. Further, also from a mixture of a bifunctional hydrolyzable silicon compound and a trifunctional hydrolyzable silicon compound or a tetrafunctional hydrolyzable silicon compound, a three-dimensional network of a polysiloxane is formed to form a coating film. The water-absorbing layer of the present invention has, for example, a structure such that the porous inorganic fine particles are maintained in a coating film comprising such a three-dimensional network of a polysiloxane.

The hydrolyzable silicon compound is preferably a silicon compound having an alkoxy group as mentioned above, and may be specifically an alkoxysilane compound represented by the following formula (1):

R¹ₘSiR²ₙ(OR³)₄₋ₘ₋ₙ (1)

In the formula (1), R¹ is a C₁₋₁₈ substituted or non-substituted monovalent hydrocarbon group, R² is a C₁₋₁₈ alkyl group or aryl group (provided that R² is a group different from R¹), R³ is a hydrogen atom or a C₁₋₁₀ monovalent hydrocarbon group which may have an oxygen atom, each of m and n is 0, 1 or 2, and m+n is 0, 1 or 2.

In the above formula (1), R¹ may be specifically a C₁₋₁₈ alkyl group, aryl group, halogenated alkyl group, halogenated aryl group, alkenyl group or substituted monovalent hydrocarbon group having some or all of the hydrogen atoms in such a group substituted by a substituent such as a (meth)acryloxy group, a mercapto group, an amino group, a cyano group or an epoxy group. It may, for example, be more specifically an alkyl group such as a methyl group, an ethyl group, a propyl group, an isopropyl group, a butyl group, a hexyl group, a decyl group or a cyclohexyl group, an aryl group such as a phenyl group or a phenethyl group, a halogenated alkyl group such as a 3-chloropropyl group, a 3,3,3-trifluoropropyl group, a 3,3,4,4,5,5,6,6,6-nonafluorohexyl group or a heptadecafluorooctyl group, a halogenated aryl group such as a p-chlorophenyl group, an alkenyl group such as a vinyl group, an allyl group, a 9-decenyl group or a p-vinylbenzyl group, a (meth)acryloxy group-containing organic group such as a 3-(meth)acryloxypropyl group, a mercapto group-containing organic group such as a 3-mercaptopropyl group or a p-mercaptomethylphenylethyl group, an amino group-containing organic group such as a 3-aminopropyl group or a (2-aminoethyl)-3-aminopropyl group, a cyano group-containing organic group such as a 2-cyanoethyl group, or an epoxy group-containing organic group such as a 3-glycidoxypropyl group or a 2-(3,4-epoxycyclohexyl)ethyl group. In this specification, the term "(meth)acryloxy" such as a (meth)acryloxy group means both "acryloxy" and "methacryloxy". Further, the after-mentioned term "(meth)acrylic" similarly means both "acrylic" and "methacrylic".

In the present invention, R¹ is preferably a 3-glycidoxypropyl group, a 2-(3,4-epoxycyclohexyl)ethyl group, a 3-(meth)acryloxypropyl group or the like. A compound having such an organic group may have an organic bond other than the siloxane bond, such being preferred with a view to obtaining room temperature curing property. In the above formula (1), the number of R¹ bonded to the silicon atom, represented by m, is 0, 1 or 2, and in a case where m is 2, the two R¹'s may be the same or different. In the present invention, m is preferably 0 from the viewpoint of the abrasion resistance.

In the formula (1), R² is a C₁₋₁₈ alkyl group or an aryl group, and may, for example, be specifically a methyl group, an ethyl group, a propyl group, a hexyl group, a decyl group, an octadecyl group or a phenyl group. Preferred as R² is an alkyl group having at most 4 carbon atoms. In the above formula (1), the number of R² bonded to the silicon atom represented by n is 0, 1 or 2, and in a case where n is 2, the two R²'s may be the same or different. In the present invention, n is preferably 0 from the viewpoint of the abrasion resistance.

In the above formula (1), R³ is a hydrogen atom or a C₁₋₁₀ monovalent hydrocarbon group which may have an oxygen atom. Such a monovalent hydrocarbon group may, for example, be a C₁₋₁₀ alkyl group, a C₂₋₁₀ alkenyl group or alkynyl group, a C₅ or C₆ cycloalkyl group, a C₂₋₁₀ acyl group, a C₆₋₁₀ aryl group or a C₇₋₁₀ aralkyl group, and may, for example, be specifically a methyl group, an ethyl group, a propyl group, an isopropyl group, a butyl group, a hexyl group, a phenyl group or an isopropenyl group. The monovalent hydrocarbon group having an oxygen atom may, for example, be a C₂₋₁₀ alkoxyalkyl group, acyloxyalkyl group or alkoxycarbonylalkyl group, and may, for example, be specifically a 2-methoxyethyl group or an acetyl group. Among them, in the present invention, in view of the hydrolysis rate and the stability of the coating liquid, particularly preferred is an alkyl group having at most 4 carbon atoms such as a methyl group, an ethyl group or an isopropyl group.

In the formula (1), the numbers of R¹ and R² bonded to the silicon atom represented by m and n are 0, 1 or 2, and m+n is 0, 1 or 2. Thus, the number of OR³ bonded to the silicon atom represented by 4-m-n in the formula (1) is 4, 3 or 2. That is, the compound is a tetrafunctional, trifunctional or bifunctional alkoxysilane compound. The 2 to 4 alkoxy groups in the alkoxysilane compound represented by the formula (1) may be different, but they are preferably the same with a view to securing uniform reactivity.

Here, as the bifunctional alkoxysilane compound, dimethyldimethoxysilane, dimethyldiethoxysilane, diphenyldimethoxysilane, diphenyldiethoxysilane, phenylmethyldimethoxysilane, phenylmethyldiethoxysilane, 3-glycidoxypropylmethyldimethoxysilane, 3-glycidoxypropylmethyldiethoxysilane, 3-(meth)acryloxypropylmethyldimethoxysilane, 3-(meth)acryloxypropylmethyldiethoxysilane, 3-aminopropylmethyldimethoxysilane, 3-aminopropylmethyldiethoxysilane, heptadecafluorooctylmethyldimethoxysilane, heptadecafluorooctylmethyldiethoxysilane or the like may be preferably used.

As the trifunctional alkoxysilane compound, methyltrimethoxysilane, methyltriethoxysilane, methyltriisopropoxysilane, methyltri-tert-butoxysilane, ethyltrimethoxysilane, ethyltriethoxysilane, ethyltriisopropoxysilane, ethyltri-tert-butoxysilane, vinyltrimethoxysilane, vinyltriethoxysilane, vinyltriisopropoxysilane, vinyltri-tert-butoxysilane, n-propyltrimethoxysilane, n-propyltriethoxysilane, n-propyltriisopropoxysilane, n-propyltri-tert-butoxysilane, n-hexyltrimethoxysilane, n-hexyltriethoxysilane, n-hexyltriisopropoxysilane, n-hexyltri-tert-butoxysilane, n-decyltrimethoxysilane, n-decyltriethoxysilane, n-decyltriisopropoxysilane, n-decyltri-tert-butoxysilane, n-octadecyltrimethoxysilane, n-octadecyltriethoxysilane, n-octadecyltriisopropoxysilane, n-octadecyltri-tert-butoxysilane, phenyltrimethoxysilane, phenyltriethoxysilane, phenyltriisopropoxysilane, phenyltri-tert-butoxysilane, 3-glycidoxypropyltrimethoxysilane, 3-glycidoxypropyltriethoxysilane, 3-glycidoxypropyltriisopropoxysilane, 3-glycidoxypropyltri-tert-butoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyltriisopropoxysilane, 2-(3,4-epoxycyclohexyl)ethyltri-tert-butoxysilane, 3-(meth)acryloxypropyltrimethoxysilane, 3-(meth)acryloxypropyltriethoxysilane, 3-(meth)acryloxypropyltriisopropoxysilane, 3-(meth)acryloxypropyltri-tert-butoxysilane, 3-aminopropyltrimethoxysilane, 3-aminopropyltriethoxysilane, 3-aminopropyltriisopropoxysilane, 3-aminopropyltri-tert-butoxysilane, 3-mercaptopropyltrimethoxysilane, 3-mercaptopropyltriethoxysilane, 3-mercaptopropyltriisopropoxysilane, 3-mercaptopropyltri-tert-butoxysilane, trifluoropropyltrimethoxysilane, trifluoropropyltriethoxysilane, trifluoropropyltriisopropoxysilane, trifluoropropyltri-tert-butoxysilane, heptadecafluorooctyltrimethoxysilane, heptadecafluorooctyltriethoxysilane, heptadecafluorooctyltriisopropoxysilane, heptadecafluorooctyltri-tert-butoxysilane or the like may suitably be used.

As the tetrafunctional alkoxysilane compound, tetramethoxysilane, tetraethoxysilane, tetraisopropoxysilane, tetra-tert-butoxysilane, dimethoxydiethoxysilane or the like may suitably be used.

As the combination of such hydrolyzable silicon compounds, preferably the bifunctional to tetrafunctional alkoxysilane compounds represented by the formula (1), it is preferred to obtain the inorganic oxide in the water-absorbing layer only from the tetrafunctional alkoxysilane compound from the viewpoint of the abrasion resistance. In order to obtain an inorganic oxide which satisfies both the abrasion resistance and easiness of formation of the coating film moderately, it is preferred to use the tetrafunctional alkoxysilane compound and for example the bifunctional alkoxysilane compound and/or the trifunctional alkoxysilane compound having the above substituent and thereby being excellent in the room temperature curing property in combination.

Further, depending upon the function required as the binder component, the types of R¹ and R² and the amount of use may be adjusted within a range not to impair the abrasion resistance.

In the present invention, a cured product obtained by selecting one member from the above hydrolyzable silicon compounds, preferably from the bifunctional to tetrafunctional alkoxysilane compounds represented by the formula (1), or selecting two or more members in combination, and subjecting it to hydrolytic condensation, is the inorganic oxide in the water-absorbing layer, in this case, a binder comprising silicon oxide. In the water-absorbing layer, this inorganic oxide preferably the binder comprising silicon oxide has a function to fix the porous inorganic fine particles in the form of a layer.

A specific method of subjecting the hydrolyzable metal compound as the material component to hydrolytic condensation to form the metal oxide is the same as the after-mentioned method for producing a functional article of the present invention, more specifically, a method of forming a water-absorbing layer on a substrate using the coating composition for forming a water-absorbing layer. This coating composition contains the inorganic oxide material component as a component to be the inorganic oxide of the water-absorbing layer. Specifically, it contains the hydrolyzable metal compound, preferably the metal alkoxide and/or its partial hydrolytic condensate.

### (3) Organic polymer

In the water-absorbing layer according to the present invention, the binder component to maintain the porous inorganic fine particles in the layer-form is preferably constituted only by the inorganic oxide from the viewpoint of the abrasion resistance, however, an organic polymer may further be contained as the case requires within a range not to impair the effect of improving the abrasion resistance in the present invention.

By using the inorganic oxide and the organic polymer in combination as the binder component, a water-absorbing layer having improved flexibility can be obtained as compared with a water-absorbing layer constituted by a binder component comprising only the inorganic oxide. By imparting the flexibility, the mechanical strength such as the crack resistance of the water-absorbing layer can be improved.

In any constitution of the material component of the inorganic oxide, blending of the organic polymer is effective to impart the flexibility to the water-absorbing layer. However, in the case of silicon oxide, particularly a silicon oxide coating film constituted only by the tetrafunctional hydrolyzable silicon compound, the flexibility is not sufficient in some cases, and in such a case, by use of the inorganic oxide and the organic polymer in combination, the effect to impart the flexibility tends to be large, and a water-absorbing layer excellent in both the abrasion resistance and the crack resistance will be obtained.

Further, when the inorganic oxide and the organic polymer are used in combination as the binder component constituting the water-absorbing layer of the functional article of the present invention, when a hydrophilic organic polymer is used as the organic polymer, the water-absorbing performance as the entire water-absorbing layer can be improved while the flexibility is imparted to the water-absorbing layer. That is, porous inorganic fine particles held at a position particularly far from the surface i.e. close to the substrate in the interior of the water-absorbing layer have water-absorbing ability but do not exhibit sufficient water-absorbing ability in some cases since the moisture will not reach around such inorganic fine particles. Thus, when a hydrophilic organic polymer is contained as a part of the binder component, the moisture can be delivered from the surface of the water-absorbing layer to the interior of the layer via the hydrophilic organic polymer, and the porous inorganic fine particles present in the interior of the layer absorb the moisture, whereby the water-absorbing performance as the entire water-absorbing layer can be improved.

When the organic polymer is contained as the binder component in such a case, the ratio of the content of the organic polymer and the inorganic oxide is preferably adjusted so that the function by the organic polymer will sufficiently be fulfilled while the abrasion resistance is maintained to a satisfactory level. Such a ratio of the content is preferably such that the content of the organic polymer is from 20 to 80 parts by mass per 100 parts by mass of the porous inorganic fine particles, more preferably from 20 to 60 parts by mass.

Further, as mentioned above, in the water-absorbing layer according to the present invention, the ratio of the content of the inorganic oxide and the porous inorganic fine particles is preferably such that the content of the inorganic oxide is from 20 to 400 parts by mass per 100 parts by mass of the porous inorganic fine particles, more preferably from 40 to 200 parts by mass, in order to increase the content of the porous inorganic fine particles as far as possible within a range where the mechanical strength such as the abrasion resistance as a layer can be maintained. Further, the ratio of the content of the organic polymer to the inorganic oxide is preferably such that the content of the organic polymer is from 20 to 200 parts by mass per 100 parts by mass of the inorganic oxide, more preferably from 20 to 80 parts by mass.

Accordingly, in a case where the binder component in the water-absorbing layer according to the present invention comprises the inorganic oxide and the organic polymer in combination, the ratio of the content of the respective components blended in the water-absorbing layer preferably satisfies the above relation, more preferably as follows. That is, the water-absorbing layer more preferably contains from 20 to 400 parts by mass of the inorganic oxide and from 20 to 80 parts by mass of the organic polymer per 100 parts by mass of the porous inorganic fine particles, and particularly preferably, it contains from 40 to 200 parts by mass of the inorganic oxide and from 20 to 60 parts by mass of the organic polymer per 100 parts by mass of the porous inorganic fine particles.

The organic polymer may, for example, be a silicone resin, an acrylic resin, a polyester resin, a polyurethane resin, a hydrophilic organic polymer containing polyoxyethylene groups, or an epoxy resin.

When the organic polymer is used as the binder component for the water-absorbing layer in combination with the inorganic oxide, it is usually used together with the material component for producing the inorganic oxide, specifically, a hydrolyzable metal compound preferably a metal alkoxide and/or its partially hydrolyzed condensate, for the coating composition for forming the water-absorbing layer as mentioned hereinafter. The form of the organic polymer when the after-mentioned coating composition is produced is preferably a liquid form or a fine particle form.

The organic polymer may also be contained in the coating composition as a material component of a resin which will be crosslinked and cured at the time of e.g. curing or drying of the inorganic oxide material component. In such a case, part of the inorganic oxide material component and the organic polymer material component or the organic polymer may partially be reacted and crosslinked within a range not to impair the properties of the inorganic oxide to be finally the binder component.

Among the organic polymers, the silicone resin is preferably a silicone oil containing a modified silicone oil, a silicone rubber obtained by part or the whole of a diorganosilicone having a hydrolyzable silyl group or a polymerizable group-containing organic group at its terminal crosslinked, or the like.

Further, the hydrophilic organic polymer containing polyoxyethylene groups is preferably polyethylene glycol (PEG), a polyether phosphate polymer or the like. The average molecular weight of PEG or the average molecular weight of the polyoxyethylene groups is not particularly limited and is preferably from 100 to 4,000, more preferably from 150 to 1,200, particularly preferably from 150 to 600.

The polyurethane resin may, for example, be preferably a polyurethane rubber, the acrylic resin may, for example, be preferably acrylonitrile rubber, a homopolymer of an alkyl acrylate, a homopolymer of an alkyl methacrylate, a copolymer of an alkyl acrylate with a monomer copolymerizable with the alkyl acrylate, or a copolymer of an alkyl methacrylate with a monomer copolymerizable with the alkyl methacrylate. The monomer copolymerizable with the alkyl (meth)acrylate may, for example, be a hydroxyalkyl ester of (meth)acrylic acid, a (meth)acrylate having a polyoxyalkylene group, or a (meth)acrylate having a silicon atom.

In a case where the epoxy resin is contained as the organic polymer in the coating composition for forming a water-absorbing layer, it is preferred that a polyepoxide as a material component of the epoxy resin and a curing agent are contained in combination, or a polyepoxide alone is contained. The polyepoxide is a generic name for a compound having a plurality of epoxy groups. That is, the average number of epoxy groups in the polyepoxide is at least 2, and in the present invention, a polyepoxide having an average number of epoxy groups of from 2 to 10 is preferred.

Such a polyepoxide is preferably a polyglycidyl compound such as a polyglycidyl ether compound, a polyglycidyl ester compound or a polyglycidylamine compound. Further, the polyepoxide may be either an aliphatic polyepoxide or an aromatic polyepoxide, and is preferably an aliphatic polyepoxide. They are a compound having at least two epoxy groups.

Among them, a polyglycidyl ether compound is preferred, and an aliphatic polyglycidyl ether compound is particularly preferred. The polyglycidyl ether compound is preferably a glycidyl ether of a di- or higher-hydric alcohol, particularly preferably a glycidyl ether of a tri- or higher-hydric alcohol with a view to improving the light resistance. The alcohol is preferably an aliphatic alcohol, an alicyclic alcohol or a sugar alcohol.

Specifically, ethylene glycol diglycidyl ether, polyethylene glycol diglycidyl ether, propylene glycol diglycidyl ether, polypropylene glycol diglycidyl ether, neopentyl glycol diglycidyl ether, glycerol polyglycidyl ether, diglycerol polyglycidyl ether, polyglycerol polyglycidyl ether, trimethylolpropane polyglycidyl ether, sorbitol polyglycidyl ether or pentaerythritol polyglycidyl ether may, for example, be mentioned. They may be used alone or in combination of two or more.

Among them, from the viewpoint of the light resistance, preferred is a polyglycidyl ether (one having an average number of glycidyl groups (epoxy groups) per one molecule more than 2) of an aliphatic polyol having at least three hydroxy groups, such as glycerol polyglycidyl ether, diglycerol polyglycidyl ether, polyglycerol polyglycidyl ether or sorbitol polyglycidyl ether. They may be used alone or in combination of two or more.

In the water-absorbing layer of the functional article of the present invention, the organic polymer to be used together with the inorganic oxide as the binder component is preferably a hydrophilic organic polymer which can impart an effect to improve the water-absorbing property in addition to the flexibility to the water-absorbing layer as mentioned above. Such a hydrophilic resin may, for example, be a silicone resin, a polyurethane resin or an epoxy resin, particularly a polyepoxide, polyethylene glycol or the like among the above organic polymers. Particularly preferred is polyethylene glycol with a view to imparting sufficient flexibility and an effect to improve the water-absorbing property to the obtainable water-absorbing layer while maintaining the mechanical strength such as the abrasion resistance.

### (4) Other components

The water-absorbing layer according to the present invention may contain, as optional components in addition to the above various components, heat-absorbing particles of e.g. ITO, heat-insulating particles such as closed hollow particles, a surface modifier, an ultraviolet absorber, an antiaging agent, HALS or the like. Such optional components can be contained within a range not to impair the effects of the present invention, and specifically, may be contained in an amount of from 0 to 10 mass% to the total solid content constituting the water-absorbing layer.

### <Production process>

The functional article comprising a substrate and the above water-absorbing layer provided on at least one surface of the substrate of the present invention can be produced, for example, by a production process comprising the following steps (A) to (C).
Step (A): a step of preparing a coating composition comprising the porous inorganic fine particles (a1), a hydrolyzable metal compound and/or its partially hydrolyzed condensate (a2) as the material component of the inorganic oxide, and as the case requires, the organic polymer or the organic polymer material component (a3), the other components (a4) which may optionally be contained, and a solvent.
Step (B): A step of applying the coating composition to the substrate surface to form a coating film.
Step (C): A step of drying the coating film as the case requires, followed by curing.

Now, the steps (A) to (C) will be specifically described.

### Step (A)

In production of the functional article of the present invention, for formation of the water-absorbing layer on the surface of a substrate, first, a coating composition is prepared.

### [Coating composition]

The coating composition comprises, as mentioned above, the porous inorganic fine particles (a1), a hydrolyzable metal compound and/or its partially hydrolyzed condensate (a2) as the material component of the inorganic oxide, as the case requires, the organic polymer or the organic polymer material component (a3), other components (a4) which may optionally be contained, and a solvent. Hereinafter, the above respective components may be respectively referred to as the component (a1), the component (a2), the component (a3) and the component (a4).

As the porous inorganic fine particles (a1), the porous inorganic fine particles as described in the above (1) are used. The porous inorganic fine particles are preferably mesoporous metal oxide particles having mesopores with an average pore size of from 1 to 50 nm, more preferably mesoporous silica. For example, as an embodiment of blending mesoporous silica to form a coating composition, mesoporous silica is formed by a sol-gel method using micelles of a surfactant as a mold, and the surfactant micelles are removed, and the mesoporous silica is blended. As a method of removing the surfactant micelles, in a case where high temperature firing is carried out, powdery mesoporous silica is used. Further, with respect to mesoporous silica having an average primary particle size of from 5 to 100 nm obtained by the above-described production method, to be preferably used from the viewpoint of transparency in the present invention, usually, a mesoporous silica dispersion after the micelles of the surfactant are removed e.g. by ultrafiltration is preferably used for production of the coating composition.

Here, in order to form a water-absorbing layer excellent in the transparency in the present invention, the coating composition of the present invention comprising porous inorganic fine particles having an average primary particle size of from 5 to 100 nm and an average pore size of from 1 to 50 nm, a metal alkoxide and/or its partially hydrolyzed condensate and a solvent is preferably used.

The content of the porous inorganic fine particles (a1) in the coating composition is preferably from 0.1 to 10.0 mass%, more preferably from 0.1 to 5.0 mass%, to the total solid content of the coating composition.

The coating composition contains a hydrolyzable metal compound and/or its partially hydrolyzed condensate (a2) as the material component of the inorganic oxide which the water-absorbing layer contains. As the hydrolyzable metal compound, the hydrolyzable metal compound as described in the above (2) is used. The hydrolyzable metal compound is preferably a metal alkoxide, more preferably an alkoxysilane compound, particularly preferably an alkoxysilane compound represented by the above formula (1).

To incorporate the component (a2) in the coating composition, either the hydrolyzable metal compound or its partially hydrolyzed condensate may be used, or both may be used in combination.

The partially hydrolyzed condensate of the hydrolyzable metal compound may be prepared, for example, by stirring the hydrolyzable metal compound in the presence of an acid catalyst and water for a predetermined time under conditions of the reaction temperature of the hydrolytic condensation of the hydrolyzable metal compound. The degree of multimerization of the partially hydrolyzed condensate to be obtained may properly be adjusted by e.g. the acid concentration, the reaction temperature or the reaction time.

The content of the component (a2) in the coating composition is preferably from 20 to 400 parts by mass as calculated as an oxide per 100 parts by mass of the component (a1), more preferably from 40 to 200 parts by mass as calculated as an oxide.

The coating composition usually contains an acid to catalyze the hydrolytic condensation of the component (a2). Such an acid may, for example, be specifically an inorganic acid such as nitric acid, hydrochloric acid, sulfuric acid or phosphoric acid, a carboxylic acid such as formic acid, acetic acid, propionic acid, glycolic acid, oxalic acid, malonic acid, succinic acid, maleic acid, phthalic acid, citric acid or malic acid, or a sulfonic acid such as methanesulfonic acid. The amount of addition of the acid may be set without any particular restriction within a range where the function as a catalyst can be fulfilled, and specifically, for example, in a case where the component (a2) is the hydrolyzable silicon compound and/or its partially hydrolyzed condensate, the amount of the acid to all the volume of the coating composition may be from about 0.6 to about 0.001 mol/L.

The coating composition to be used in the present invention contains water for hydrolytic condensation of the component (a2) in addition to the component (a2) and the acid. The amount of water which the coating composition contains is not particularly limited so long as it is sufficient for hydrolytic condensation of the component (a2), and for example, in a case where the component (a2) is the hydrolyzable silicon compound and/or its partially hydrolyzed condensate, the amount of water is preferably from 1 to 20 equivalent amount, more preferably from 3 to 16 equivalent amount, by the molar ratio to the amount of the component (a2) as calculated as SiO₂. If the amount of water is less than 1 equivalent amount by the molar ratio, the hydrolysis will hardly proceed, the coating composition may be repelled depending upon the substrate at the time of application in the after-mentioned step (B), or the haze may increase. If it exceeds 20 equivalent amount, the hydrolysis rate tends to be high, and the long term storage property may be insufficient.

In this specification, the above water is regarded as part of the solvent of the coating composition. Further, in a case where a water dispersion is used when the porous inorganic fine particles (a1) are blended to form the coating composition, the water is also regarded as water contained in the coating composition.

In a case where the binder component comprises the inorganic oxide and the organic polymer in combination in the water-absorbing layer in the present invention, the coating composition further contains the organic polymer or the organic polymer material component (a3). The component (a3) is as described in the above (3) including the preferred embodiments, and in the present invention, a hydrophilic organic polymer or a hydrophilic organic polymer material component is preferably used. The content of the component (a3) in the coating composition is preferably from 20 to 80 parts by mass, more preferably from 20 to 60 parts by mass per 100 parts by mass of the component (a1).

In this case, more specifically, the coating composition preferably contains from 0.1 to 10 mass% of the component (a1) to the total solid content of the coating composition, and contains from 20 to 400 parts by mass of the component (a2) as calculated as an oxide and from 20 to 80 parts by mass of the component (a3) per 100 parts by mass of the component (a1), more preferably contains from 40 to 200 parts by mass of the component (a2) as calculated as an oxide and from 20 to 60 parts by mass of the component (a3) per 100 parts by mass of the component (a1).

Further, when the water-absorbing layer of the present invention contains other components (4), the coating composition contains the above-mentioned components in the same amount as mentioned above as the content to the total solid content.

The coating composition to be used in the present invention is usually prepared in the form of a solution or a dispersion having predetermined amounts of the components (a1) and (a2) as essential components, and optional component (a3) and components (a4) dissolved or dispersed in the solvent. It is necessary that the total solid content in the coating composition is stably dissolved or dispersed in the solvent, and for example, in a case where the component (a2) is a hydrolyzable silicon compound and/or its partially hydrolyzed condensate, the solvent preferably contains an alcohol in an amount of at least 20 mass% to the total amount, more preferably at least 50 mass% of an alcohol. In the present invention, particularly preferably the solvent comprising water and an alcohol is used.

The amount of the solvent which the coating composition contains is not particularly limited so long as the total solid content is stably dissolved or dispersed in the solvent as mentioned above, and is preferably from 500 to 1,000,000 parts by mass, more preferably from 900 to 1,000,000 parts by mass per 100 parts by mass of the total solid content.

The alcohol to be used for the solvent may, for example, be preferably methanol, ethanol, 1-propanol, 2-propanol, 1-butanol, 2-butanol, 2-methyl-1-propanol, 1-methoxy-2-propanol, 2-ethoxyethanol, 4-methyl-2-pentanol or 2-butoxyethanol, and among them, an alcohol having a boiling point of from 80 to 160°C is preferred in view of favorable solubility of the hydrolyzable silicon compound and/or its partially hydrolyzed condensate and favorable coating property on the substrate. Specifically, preferred is ethanol, 1-propanol, 2-propanol, 1-butanol, 2-butanol, 2-methyl-1-propanol, 1-methoxy-2-propanol, 2-ethoxyethanol, 4-methyl-2-pentanol or 2-butoxyethanol.

Further, the coating composition may contain a curing agent to increase the room temperature curing property or the like of the component (a2). As the curing agent, in a case where the hydrolyzable silicon compound and/or its partially hydrolyzed condensate is used as the component (a2), a basic compound such as lithium hydroxide, sodium hydroxide, potassium hydroxide, sodium methylate, sodium acetate, sodium formate, potassium acetate, potassium formate, potassium propionate, tetramethylammonium chloride or tetramethylammonium hydroxide; an amine compound such as n-hexylamine, tributylamine, diazabicycloundecene, ethylenediamine, hexanediamine, diethylenetriamine, triethylenetetramine, tetraethylenepentamine or ethanolamine; a titanium compound such as tetraisopropyl titanate or tetrabutyl titanate; an aluminum compound such as aluminum triisobutoxide, aluminum triisopropoxide, aluminum acetyl acetonate, aluminum perchlorate or aluminum chloride: a tin compound such as tin acetylacetonate or dibutyltin octylate; a metal-containing compound such as cobalt octylate, cobalt acetylacetonate or iron acetylacetonate; or an acidic compound such as phosphoric acid, nitric acid, phthalic acid, p-toluenesulfonic acid or trichloroacetic acid may, for example, be suitably used.

The content of the curing agent in the coating composition may, for example, be from 0 to 10 parts by mass per 100 parts by mass of the component (a2).

The coating composition for forming the water-absorbing layer to be used in the present invention may be prepared by weighing predetermined amounts of the various components and properly mixing them into a uniform composition.

### Step (B)

In the step (B), the coating composition obtained in the step (A) is applied on a substrate to form a coating film of the coating composition. The coating film formed here is a coating film containing the solvent. The method of applying the coating composition to a substrate is not particularly limited so long as the coating composition is uniformly applied, and a known method such as a flow coating method, a dip coating method, a spin coating method, a spray coating method, a flexographic printing method, a screen printing method, a gravure printing method, a roll coating method, a meniscus coating method or a die coating method may be employed. The thickness of the coating film of the coating composition is determined considering the thickness of the water-absorbing layer finally obtainable.

### Step (C)

Then, the step (C) is carried out, which comprises removing the solvent from the coating film of the coating composition formed on the substrate and subjecting the component (a2), for example, the hydrolyzable silicon compound and/or its partially hydrolyzed condensate to hydrolytic condensation for curing, and further when the organic polymer material component is contained as the component (a3), subjecting it to reaction to be an organic polymer, to form the water-absorbing layer. Now, the step (C) will be described with reference to a case where the hydrolyzable silicon compound and/or its partially hydrolyzed condensate is used as the component (a2), as an example.

Since the coating film of the coating composition contains a volatile organic solvent or the like, after formation of the coating film, first, this volatile component is evaporated and removed. Removal of the volatile component is preferably carried out by heating and/or vacuum drying. After formation of the coating film of the coating composition on the substrate, it is preferred to carry out temporary drying at a temperature of from room temperature to about 120°C, with a view to improving the leveling property of the coating film. Usually, during the operation of temporary drying, the volatile component is vaporized and removed simultaneously, and accordingly the operation of removing the volatile component is included in temporary drying. The time for temporary drying, i.e. the time for operation of removing the volatile component is preferably from about 3 seconds to about 2 hours, although it depends on the coating composition to be used for forming the coating film.

On that occasion, the volatile component is preferably sufficiently removed, but may not completely be removed. That is, the organic solvent or the like may remain in the water-absorbing layer within a range not to impair the performance of the water-absorbing layer. Further, when heating is carried out to remove the volatile component, heating for curing the component (a2) and for reaction of the component (a3) to be subsequently carried out as the case requires, and heating for removal of the volatile component, i.e. usually temporary drying, may be carried out continuously.

As mentioned above, the volatile component is removed from the coating film as the case requires, and then the hydrolyzable silicon compound or the like is cured. This reaction may be carried out at room temperature or under heating. In a case where the cured product is formed with heating, if the cured product contains an organic component, the upper limit of the heating temperature is preferably 200°C, particularly preferably 190°C. Since a cured product can be formed even at room temperature, the lower limit of the heating temperature is not particularly limited. However, in a case where acceleration of the reaction by heating is intended, the lower limit of the heating temperature is preferably 60°C, more preferably 80°C. Accordingly, the heating temperature is preferably from 60 to 200°C, more preferably from 80 to 190°C. The heating time is preferably from several minutes to several hours, although it depends on the coating composition to be used.

Further, in formation of the water-absorbing layer, if a reaction of the organic polymer material component is necessary in addition to the curing reaction of the component (a2), usually, by properly selecting the reaction conditions of the organic polymer material component among the curing reaction conditions for the component (a2), both the reactions may be carried out simultaneously.

### [Article for transport equipment]

The functional article of the present invention is suitably used in an application as an article for a transport equipment. The article for a transport equipment may, for example, be window glass (windshield, side glass or rear glass), a mirror, etc. in electric cars, automobiles, ships, aircrafts, etc.

With the functional article of the present invention or the article for a transport equipment provided with the functional article, particularly in an application in a see-through field of e.g. various window glasses, by using the functional article of the present invention of which the average primary particle size of the porous inorganic fine particles is adjusted to be from 5 to 100 nm, the water-absorbing layer which the functional article has has water-absorbing functions relating to the dew condensation prevention, the moisture-conditioning function, the anti-fouling function, the anti-fogging function, the anti-icing function and the like, whereby it becomes easy to secure a visual field, and the safety can be improved in the operation of trains, vehicles, etc. Further, since the water-absorbing layer is excellent also in the abrasion resistance, the water-absorbing property can be maintained even in long-term use under various use conditions including use in outdoor as an article for a transport equipment.

### [Article for building]

The functional article of the present invention is suitably used in an application as an article for building. The article for building may, for example, be preferably window glass, a mirror for a washstand, a mirror for a bathroom, a wall mirror, etc. in various buildings.

With the functional article of the present invention or the article for building provided with the functional article, particularly in an application in a lighting see-through member such as various window glasses or a lighting see-though member having heat insulating property imparted, the water-absorbing layer which the functional article has has water-absorbing functions relating to the dew condensation prevention, the moisture-conditioning function, the anti-fouling function, the anti-fogging function, the anti-icing function and the like, whereby favorable outer appearance can always be maintained and further, growing of mold, damage of household articles, propagation of mites and the like can be prevented. Further, since the water-absorbing layer is also excellent in the abrasion resistance, the water-absorbing property can be maintained even in long-term use under various use conditions including use in outdoor as an article for building.

### EXAMPLES

Now, the present invention will be described in detail with reference to Examples. However, it should be understood that the present invention is by no means restricted thereto. Examples 1 to 4 and 6 to 9 are Examples of the present invention, and Examples 5 and 10 are Comparative Examples.

Porous inorganic fine particles used in Examples and Comparative Examples and functional articles obtained in Examples and Comparative Examples were evaluated as follows.

### [Porous inorganic fine particles]

The average primary particle size was calculated in such a manner that from an image of a porous inorganic fine particle sol photographed by a transmission electron microscope JEM-1230 (manufactured by JEOL Ltd.), 200 particles were randomly selected, the particle sizes of the respective particles were measured, and the average of the particle sizes of 200 particles were taken as the average primary particle size. Further, the average pore size was calculated by an image analysis program by the above JEM-1230 (manufactured by JEOL Ltd.).

### [Thickness]

The thickness of the water-absorbing layer was measured by a scanning electron microscope S4300.

### [Evaluation of water-absorbing property]

Of a functional article left to stand in an environment at 20°C under a relative humidity of 50% for one hour, the surface of the water-absorbing layer was held over a warm water bath of 40°C, and the time (seconds) until distortion by cloudiness or a water film was confirmed was measured and employed for evaluation as the index of the water-absorbing property. Conventional soda lime glass was clouded in from 1 to 3 seconds. As the evaluation result, the time being 20 seconds or longer was evaluated as ○, and the time shorter than 20 seconds was evaluated as x.

### [Evaluation of outer appearance of water-absorbing layer]

With respect to the outer appearance of the water-absorbing layer, the haze was measured and evaluated based on the following evaluation standards.
○: Haze being less than 1%.
×: The haze being at least 1%.

### [Evaluation of abrasion resistance]

In accordance with JIS R 3212 (car exterior side, glass-plastic), by an abrasion resistance test machine model 5130 manufactured by Taber, a test was carried out with a CS-10F abrasive wheel. That is, to the surface of the water-absorbing layer of a functional article, the above abrasive wheel was contacted and rotated 1,000 rotations under a load of 4.90 N. A change ΔH (%) in the haze of the functional article between before and after the rotations was measured and evaluated based on the following evaluation standards.
○: ΔH being 10% or smaller.
x: Corresponding to at least one of "ΔH larger than 10%" and "part of the water-absorbing layer was peeled".

### <1> Preparation of porous inorganic fine particles and inorganic oxide material component

### [Production Example 1]

In a glass container equipped with a stirring machine and a thermometer, distilled water (240 g, manufactured by Wako Pure Chemical Industries, Ltd.), triethanolamine (0.42 g, manufactured by JUNSEI CHEMICAL CO., LTD.) and hexadecyltrimethylammonium bromide (2.00 g, manufactured by TOKYO CHEMICAL INDUSTRY CO., LTD.) were put and stirred at 80°C for 30 minutes. Then, tetramethoxysilane (2.29 g, manufactured by JUNSEI CHEMICAL CO., LTD.) was added and stirred at 80°C for 2 hours, and ultrafiltration (molecular weight cutoff: 12,000 to 14,000) using a 2M acetic acid aqueous solution as a surfactant eluent was carried out 7 times, and ultrafiltration (molecular weight cutoff: 12,000 to 14,000) using water was carried out once as an acid removal step. Further, filter filtration (0.5 µm) was carried out to obtain dispersion A of mesoporous silica (0.4 mass%, average primary particle size: 30 nm (particle size distribution: 20 to 50 nm), average pore size: 4 nm (size distribution: 2 to 5 nm)) as porous inorganic fine particles.

### [Production Example 2]

In a glass container equipped with a stirring machine and a thermometer, a mixed alcohol (ethanol : isopropyl alcohol : n-propyl alcohol = 88 : 4 : 8 (mass ratio), 237.51 g, Neoethanol PIP (tradename), manufactured by DAISHIN CHEMICAL CO., LTD.), a tetramer (1.96 g, M Silicate 51 (tradename), manufactured by TAMA CHEMICALS CO., LTD.) of tetramethoxysilane (hereinafter referred to as "TMOS" if desired), hydrochloric acid (6.94 g, special grade, manufactured by JUNSEI CHEMICAL CO., LTD.) and distilled water (3.60 g, manufactured by Wako Pure Chemical Industries, Ltd.) were added with stirring, followed by stirring at 25°C for 3 hours to obtain solution B containing partially hydrolyzed condensate (0.4 mass%) of TMOS as an inorganic oxide material component.

### [Production Example 3]

In a glass container equipped with a stirring machine and a thermometer, a mixed alcohol (ethanol : isopropyl alcohol : n-propyl alcohol = 88 : 4 : 8 (mass ratio), 26.39 g, Neoethanol PIP (tradename), manufactured by DAISHIN CHEMICAL CO., LTD.), tetraethoxysilane (hereinafter referred to as "TEOS" if desired) (10.40 g, manufactured by TAMA CHEMICALS CO., LTD.), distilled water (10.79 g, manufactured by Wako Pure Chemical Industries, Ltd.), hydrochloric acid (0.42 g, manufactured by JUNSEI CHEMICAL CO., LTD.) and polyethylene glycol (2.00 g, molecular weight: 200, manufactured by JUNSEI CHEMICAL CO., LTD.) were added with stirring, followed by stirring at 25°C for 3 hours. The mixture was diluted 25-fold with the above mixed alcohol (Neoethanol PIP, manufactured by DAISHIN CHEMICAL CO., LTD.) to obtain solution C containing a hydrophilic organic polymer (PEG) (0.16 mass%) and a partially hydrolyzed condensate (0.24 mass%) of TEOS as an inorganic oxide material component.

### [Production Example 4]

In a glass container equipped with a stirring machine and a thermometer, a mixed alcohol (ethanol : isopropyl alcohol : n-propyl alcohol = 88 : 4 : 8 (mass ratio), 15.14 g, Neoethanol PIP (tradename), manufactured by DAISHIN CHEMICAL CO., LTD.), tetraethoxysilane (10.40 g, manufactured by TAMA CHEMICALS CO., LTD.), distilled water (10.79 g, manufactured by Wako Pure Chemical Industries, Ltd.), hydrochloric acid (0.42 g, manufactured by JUNSEI CHEMICAL CO., LTD.) and polyethylene glycol (0.75 g, molecular weight: 200, manufactured by JUNSEI CHEMICAL CO., LTD.) were added with stirring, followed by stirring at 25°C for 3 hours. The mixture was diluted 25-fold with the above mixed alcohol (Neoethanol PIP, manufactured by DAISHIN CHEMICAL CO., LTD.) to obtain solution D containing a hydrophilic organic polymer (PEG) (0.08 mass%) and a partially hydrolyzed condensate (0.32 mass%) of TEOS as an inorganic oxide material component.

### [Production Example 5]

In a glass container equipped with a stirring machine and a thermometer, a mixed alcohol (ethanol : isopropyl alcohol : n-propyl alcohol = 88 : 4 : 8 (mass ratio), 48.89 g, Neoethanol PIP (tradename), manufactured by DAISHIN CHEMICAL CO., LTD.), tetraethoxysilane (10.40 g, manufactured by TAMA CHEMICALS CO., LTD.), distilled water (10.79 g, manufactured by Wako Pure Chemical Industries, Ltd.), hydrochloric acid (0.42 g, manufactured by JUNSEI CHEMICAL CO., LTD.) and polyethylene glycol (4.50 g, molecular weight: 200, manufactured by JUNSEI CHEMICAL CO., LTD.) were added with stirring, followed by stirring at 25°C for 3 hours. The mixture was diluted 25-fold with the above mixed alcohol (Neoethanol PIP, manufactured by DAISHIN CHEMICAL CO., LTD.) to obtain solution E containing a hydrophilic organic polymer (PEG) (0.24 mass%) and a partially hydrolyzed condensate (0.16 mass%) of TEOS as an inorganic oxide material component.

### [Production Example 6]

In a glass container equipped with a stirring machine and a thermometer, a mixed alcohol (ethanol: isopropyl alchol : n-propyl alcohol = 88 : 4 : 8 (mass ratio), 249 g, Neoethanol PIP (tradaname), manufactured by DAISHIN CHEMICAL CO., LTD.) and polyethylene glycol (1.00 g, molecular weight: 200, manufactured by JUNSEI CHEMICAL CO., LTD.) were added with stirring, followed by stirring at 25°C for 30 minutes to obtain solution F containing a hydrophilic organic polymer (PEG) (0.4 mass%).

### <2> Preparation of coating composition

### [Example 1]

In a glass container equipped with a stirring machine and a thermometer, dispersion A (50 g) of mesoporous silica obtained in the above Production Example 1 and solution B (50 g) containing a partially hydrolyzed condensation of TMOS obtained in the above Production Example 2 were added with stirring, followed by stirring at 25°C for 30 minutes to obtain coating composition 1.

### [Examples 2 to 4]

In a glass container equipped with a stirring machine and a thermometer, dispersion A (50 g) of mesoporous silica obtained in the above Production Example 1 and each of solutions C, D and E (50 g) containing a hydrophilic organic polymer (PEG) and a partially hydrolyzed condensate of TEOS obtained in the above Production Examples 3 to 5 were added with stirring, following by stirring at 25°C for 30 minutes to obtain each of coating compositions 2 to 4.

### [Example 5]

In a glass container equipped with a stirring machine and a thermometer, dispersion A (50 g) of mesoporous silica obtained in the above Production Example 1 and solution F (50 g) containing a hydrophilic organic polymer (PEG) obtained in the above Production Example 6 were added with stirring, followed by stirring at 25°C for 30 minutes to obtain coating composition 5.

### <3> Production and evaluation of functional article

Using each of coating compositions obtained in the above Examples, a functional article was prepared as follows, and evaluated by the above evaluation methods. The results are shown in Table 1 together with various components contained in the coating composition and their blend ratios. The amount of the inorganic oxide material component (a2) is as calculated as an oxide. Further, in the row of water-absorbing property in Table 1, measured values are shown in brackets together with the evaluation results.

### [Examples 6 to 9]

Using as a substrate, a dry and clean soda lime glass substrate (water contact angle: 3°, 200 mm × 200 mm × 2 mm in thickness), the surface of which was cleaned by abrasion with cerium oxide, to the surface of the glass substrate, each of coating compositions 1 to 4 obtained in the above Examples 1 to 4 as identified in Table 1 was applied by flow coating and held in an electric furnace at 100°C for one hour to form a water-absorbing layer, thereby to obtain each of functional articles in Examples 6 to 9.

### [Example 10]

Using as a substrate, a dry and clean soda lime glass substrate (water contact angle: 3°, 200 mm × 200 mm × 2 mm in thickness), the surface of which was cleaned by abrasion with cerium oxide, to the surface of the glass substrate, coating composition 5 obtained in the above Example 5 as identified in Table 1 was applied by flow coating and held in an electric furnace at 100°C for one hour, thereby to obtain the functional article in Comparative Example.

**TABLE 1**

| Ex. | | | 6 | 7 | 8 | 9 | 10 |
|---|---|---|---|---|---|---|---|
| Coating composition | Porous inorganic fine particles (a1) | Type | Mesoporous silica | Mesoporous silica | Mesoporous silica | Mesoporous silica | Mesoporous silica |
| | | Average primary particle size (particle size distribution) | 30 nm (20 to 50 nm) | 30 nm (20 to 50 nm) | 30 nm (20 to 50 nm) | 30 nm (20 to 50 nm) | 30 nm (20 to 50 nm) |
| | | Average pore size (size distribution) | 4 nm (2 to 5 nm) | 4 nm (2 to 5 nm) | 4 nm (2 to 5 nm) | 4 nm (2 to 5 nm) | 4 nm (2 to 5 nm) |
| | | Amount (wt%) in composition | 0.2 | 0.2 | 0.2 | 0.2 | 0.2 |
| | Inorganic oxide material component (a2) | Compound | Partially hydrolyzed condensate of TMOS | Partially hydrolyzed condensate of TEOS | Partially hydrolyzed condensate of TEOS | Partially hydrolyzed condensate of TEOS | - |
| | | Parts by mass per 100 parts by mass of (a1) | 100 | 60 | 80 | 40 | 0 |
| | Organic resin (a3) | Compound | - | PEG | PEG | PEG | PEG |
| | | Parts by mass per 100 parts by mass of (a1) | 0 | 40 | 20 | 60 | 100 |
| Evaluation of water-absorbing layer | Thickness [µm] | | 0.1 to 0.3 | 0.5 to 1.0 | 0.5 to 1.0 | 0.5 to 1.0 | 1.0 to 3.0 |
| | Outer appearance (haze) | | ○ | ○ | ○ | ○ | ○ |
| | Water-absorbing property | | ○ (30 seconds) | ○ (40 seconds) | ○ (30 seconds) | ○ (50 seconds) | ○ (80 seconds) |
| | Abrasion resistance | | ○ | ○ | O | ○ | × |

### INDUSTRIAL APPLICABILITY

The functional article of the present invention has both abrasion resistance and water-absorbing functions relating to the dew condensation prevention, the moisture-conditioning function, the anti-fouling function, the anti-fogging function, the anti-icing function and the like, and is thereby useful as an article for a transport equipment, specifically, as window glass (windshield, side glass, rear glass), a mirror, etc. in electric glass, automobiles, ships, aircraft, etc. Further, it is also useful as an article for building, specifically, as window glass, a mirror for a washstand, a mirror for a bathroom, a wall mirror, etc. for buildings.

The entire disclosure of Japanese Patent Application No. 2011-087383 filed on April 11, 2011 including specification, claims and summary is incorporated herein by reference in its entirety.

## Claims

1. A functional article comprising a substrate and a water-absorbing layer provide on at least one surface of the substrate, wherein the water-absorbing layer contains porous inorganic fine particles and an inorganic oxide as a binder component.

2. The functional article according to Claim 1, wherein the water-absorbing layer further contains an organic polymer as a binder component.

3. The functional article according to Claim 1 or 2, wherein the porous inorganic fine particles have an average primary particle size of from 5 to 100 nm and an average pore size of from 1 to 50 nm.

4. The functional article according to any one of Claims 1 to 3, wherein the inorganic oxide in the water-absorbing layer is a metal oxide obtained by hydrolytic condensation of a metal alkoxide.

5. The functional article according to any one of Claims 2 to 4, wherein the organic polymer is a hydrophilic organic polymer.

6. The functional article according to any one of Claims 1 to 5, wherein the ratio of the content of the porous inorganic fine particles and the inorganic oxide in the water-absorbing layer is such that the content of the inorganic oxide is from 20 to 400 parts by mass per 100 parts by mass of the porous inorganic fine particles.

7. The functional article according to any one of Claims 2 to 6, wherein the ratio of the content of the porous inorganic fine particles and the organic polymer in the water-absorbing layer is such that the content of the organic polymer is from 20 to 80 parts by mass per 100 parts by mass of the porous inorganic fine particles.

8. The functional article according to any one of Claims 1 to 7, wherein the substrate is a glass plate.

9. An article for a transport equipment, provided with the functional article as defined in any one of Claims 1 to 8.

10. An article for building, provided with the functional article as defined in any one of Claims 1 to 8.

11. A coating composition comprising porous inorganic fine particles having an average primary particle size of from 5 to 100 nm and an average pore size of from 1 to 50 nm, a metal alkoxide and/or its partially hydrolyzed condensate, and a solvent.

12. The coating composition according to Claim 11, which further contains an organic polymer or its material component.

13. The coating composition according to Claim 12, wherein the organic polymer is a hydrophilic organic polymer.

14. The coating composition according to any one of Claims 11 to 13, wherein the ratio of the content of the porous inorganic fine particles and the metal alkoxide and its partially hydrolyzed condensate in the composition is such that the total amount of the metal alkoxide and its partially hydrolyzed condensate as calculated as an oxide is from 20 to 400 parts by mass per 100 parts by mass of the porous inorganic fine particles.

15. The coating composition according to any one of Claims 12 to 14, wherein the ratio of the content of the porous inorganic fine particles and the organic polymer and its material component in the composition is such that the total amount of the organic polymer and its material component is from 20 to 80 parts by mass per 100 parts by mass of the porous inorganic fine particles.
